# EUROPEAN PATENT SPECIFICATION

(11) **EP 1 383 276 B1**
(45) Date of publication and mention of the grant of the patent: **19.09.2007**
(21) Application number: 02077945.0
(22) Date of filing: 18.07.2002
(51) Int. Cl.: H04L 12/24, H04Q 3/00

(54) **Management system and method for service subscription provisioning**
Verwaltungssystem umd Methode zur Erbringung von Abonnementdienstleistungen
Système et procédé de gestion de la prestation de services d'abonnés

(43) Date of publication of application: 21.01.2004
(60) Divisional application: 05102619.3
(73) Proprietor: TELEFONAKTIEBOLAGET LM ERICSSON (publ), 164 83 Stockholm (SE)
(72) Inventor: Agundez-Dominguez, José Luis, 28035 Madrid (ES); Castro-Castro, Fabian, 28039 Madrid (ES)
(74) Representative: Elzaburu Marquez, Alberto

(56) References cited:
- EP-A- 0 682 429
- EP-A- 0 838 919
- WO-A-00/38437
- WO-A-97/05703
- WO-A-98/37707
- US-A- 5 579 384
- US-A1- 2002 013 827
- US-B1- 6 212 169
- J.C-K. LEE, S. MOHAPI, H.E. HANRAHAN: "Service Subscription Information Management in a TINA Environment using Object-Oriented Middleware" IEEE INTELLIGENT NETWORK 2001 CONFERENCE RECORD, 6 - 9 May 2001, pages 121-125, XP001119876
- ANONYMOUS: "Digital Cellular Telecommunications System (GSM); UMTS; Telecommunication Management; Configuration Management; Generic Network Ressources IRP: NRM" ETSI 3GPP TS 32.622 V4.2.0, March 2002 (2002-03), pages 1-36, XP002220634

## Description

### FIELD OF THE INVENTION

The present invention relates to subscription management in communication networks and, more specifically, to the provision of a generic interface suitable for service provisioning mechanisms.

### BACKGROUND

The provisioning process is typically carried out by a number of resources interfacing to each other in such a manner that a provisioning entity issues the appropriate orders to a number of provisioned entities in order to initiate a subscription where a subscriber settles a contractual agreement with a service provider regarding a provided service. The subscriber is thus allowed to subscribe to and withdraw from services as well as to register a number of users authorized to use such services, and to adapt certain user preferences or settings. The provisioning process as such is functionally independent from the service operation.

The constant evolution of products and platforms makes the communication networks become more complex, with more network nodes and with more interfaces appearing between network nodes, in addition to the currently existing interfaces between said network nodes. For instance, suitable interfaces for use during provisioning process go from the legacy of proprietary Command Line Interface (CLI), such as a so-called Man-Machine Language (MML) and a Common Administration Interface (CAI), to newer and widely known industry or internet standards such as the Common Object Request Broker Architecture (CORBA), the Lightweight Directory Access Protocol (LDAP), Java or Web Services.

The number of different interfaces suitable for provisioning is expected then to continue growing, due to a lack of well-defined, and agreed-on, set of principles and conventions to encourage the appearance of convergent solutions for a standard provisioning mechanism. This makes the task of supplying an integrated service provisioning an increasingly difficult, time-consuming, and expensive problem.

Therefore, a primary object of the present invention is the provision of a generic solution for provisioning services, fitting any domain and for any services, allowing potential users of a service to be subscribed to and withdrawn from the service, as well as to provide preferences and settings for the service operation.

### RELATED ART

An interesting starting point for approaching the objects of the present invention is the International publication WO 00/38437. This patent application proposes a subscription handler interface between a Customer Administrative System (CAS) and database network elements of a communication network. This interface includes a database for storing network over-view knowledge in the form of a network model, and a subscription handler service agent in communication with said database network elements. The subscription handler service agent is responsive to the issued order for storing the order in the database as network over-view knowledge concerning the subscriptions maintained in the database network elements. In particular, this agent receives orders originated by the Customer Administrative System, consults databases storing information about the network nodes where the service related information is maintained, acts over the corresponding network elements, and also evaluates whether or not the received orders are coherent.

Solutions like the above subscription handler agent are, however, too specific and particularly applicable for a given point in the network, namely between a CAS and a Mediation Device network node, the latter intended for controlling the provisioning transactions. That is, there is a need to mediate between the provisioning and the provisioned entities. In this respect, the invention is intended to be applied between a CAS and any particular mediation device arranged for mediating between the interface supported by CAS and the specific protocol that a particular node supports for being provisioned.

Thus, the above subscription handler agent is not well suited in scenarios where extra network nodes are not desired, or wherein the existing network architecture does not comply with the particular provisioning architecture proposed by this related art application, which is intended for a CAS communicating with a plurality of database network elements, each database network element having its own interface.

Further, US patent application publication US 2002/0013827 describes a Personal Service Environment Manager (PSEM) for managing information related to end-users of a communication network. This Personal Service Environment Manager includes functions for providing and managing service data, end-user profile data, and end-user service profile data, shared among applications servers and user groups. Relevant aspects of said PSEM are its interfaces to other entities and functions, its distinguishing between user profile data and service-related data, the latter in terms of service profile data and service data, and its further distinguishing between service profile data and service data.

This Personal Service Environment Manager is only applicable in the Service Network, and it is attached to a particular protocol, namely a Lightweight Directory Access Protocol (LDAP), with help of protocol translators and suitable Application Programming Interfaces (API's). This solution, while enough to accomplish its purpose, becomes quite restrictive and hardly applicable when the intention is to provide a solution covering all network parts that likely include several network domains, applying to different nodes that manage multiple variety of protocols, and thus harmonising a common provisioning mechanism.

A still further teaching in respect of management of user-service relationships is found in the European patent publication EP 1 128 695. This teaching proposes a Telecommunication system for managing user-service relationships and the corresponding software. The system comprises a memory for storing user signals defining users and for storing service signals defining user-service relationships. More particularly, the system defines three kinds of signals representing, users, services and user-service relationships. Another exemplary teaching in this technical field can be found in EP-A-0 838 919 wherein the problem of managing lower layer agents from a user interface always through an upper layer manager and a sub-manager is discussed. This problem is solved by splitting the user interface into an upper layer user interface and a lower layer user interface, and by splitting the sub-manger into an upper layer agent and a lower layer manager; in this way, the upper layer user interface communicates with the upper layer agent and with the lower layer user interface, whereas the lower layer user interface communicates with the lower layer agent through the lower layer manager.

The teaching behind these applications is, however, strongly oriented to user-service relationships whereas a complete interface solution applying to different provisioning and provisioned network entities is not sufficiently disclosed. Thus, the inventions do not seem to be directly applicable for networks including several network domains wherein service data may be more significantly linked to subscribers than to users in a particular domain. Moreover, these applications rather seem to apply for local establishment of appropriate relationships between user and service data than to manage a generic provisioning mechanism applying to different nodes with a variety of protocols, and thus harmonising with a common provisioning mechanism.

The solutions in the above applications as well as other currently existing mechanisms for provisioning of services still present quite significant drawbacks for approaching a generic mechanism that is not essentially coupled with a particular technology, a particular data modelling, or a particular Operation and Maintenance system.

That is, quite a few existing solutions are based on a tight-coupling with a particular technology like, for example, Java or CORBA or LDAP. This technology coupling assumes the need for supporting a given technology for the communications protocol and/or the data modelling language in both parts of the provisioning interface. Nevertheless, forcing a specific technology is not always an acceptable solution. An exemplary teaching of this coupling is found in the document "Service Subscription Information Management in a TINA environment using Object-oriented middleware" (J.C-K. LEE et al.) which provides for a managing entity and a number of managed entities, and where a middle tier application is interposed between the managing entity and the managed entities in order to allow communication with the managing entity with a generic interface that includes a generic data model, and the middle tier sharing a common data model and relationships fulfilling rules set at the middle tier with those in the managed entities intermediate communicator. This teaching, apart from requiring the modification of the middle tier any time a new managed entity is coupled to the system, is essentially tied to the use of CORBA for providing a distributed object communication.

In addition to the technology coupling, there is also a quite extended trend to provide solutions where the coupling is addressed to an applicable data model. In this respect, existing interfaces have strong dependencies with the data models of the services being provisioned, making such provision complex to extend and to improve. A typical example of this data model coupling is how embedded the data model is within the commands on proprietary Command Line Interfaces (CLI) for provisioning. Another example of this data model coupling can be learnt from US-A-5579384 wherein a centralized management entity collects Images of a data model in each managed entity and, with help of protocol adapters and transformation functions, contributes to build up a generic data model towards the end-users and other systems. This solution, whilst arranged for building up a generic interface, requires the modification of the centralized management entity whenever new managed entities, or new data models in each managed entity, are introduced in the network. A still further example of this data model coupling can be learnt from the international publication WO-A-98/37707 wherein a number of mediating devices is provided, each one of them having knowledge about the particular objects managed by each managed system. However, the model in this publication requires the modification of mediating devices any time a new managed entity is coupled to the system.

Apart from the above couplings, there are other provisioning mechanisms deeply integrated with Operation and Maintenance (O&M) systems, thus making it difficult to understand as well as limiting the functionality which an adaptable O&M system is expected to achieve for as many domains as possible. For example, US-B-6212169 addresses the problem of reconfiguring a call or a logical link whilst ensuring the correctness of the new parameters, the propagation of new parameters to the relevant network elements, and the recovering from any failure occurred during the reconfiguration attempt.

Last, but not least, is that most of the currently existing interfaces operating in known provisioning mechanisms are based on obsolete or proprietary technologies. Such proprietary interfaces can not be easily found outside vendor-specific networks, which limits the universality of the interface, and makes it less attractive and useful. By way of contrast, there are also some trends that, even though they can fit the provisioning problem domain, still offer a quite theoretical approach and lack the definition of meaningful operations and objects specific to a generic but applicable provisioning mechanism.

Currently, the 3^{rd} Generation Partnership Project (3GPP) has introduced the concept of an Integration Reference Point (hereinafter IRP) for Operation and Maintenance (O&M) interfaces as described in 3GPP TS 32.102. Virtually all types of telecom and datacom networks comprise many different technologies purchased from several different vendors. This implies that the corresponding management solutions need to be built by integrating product-specific applications from different vendors with a number of generic applications, each generic application providing some aspect of multi-vendor or multi-technology support.

When providing integrated management solutions for multi-vendor networks, there is a strong requirement under 3GPP scope that the Network Elements and its corresponding management solutions are arranged for being integrated into other systems. In this context, a Network Element (NE) is a discrete telecommunications entity, which can be managed over a specific interface. Thus, telecom vendors are strongly impelled to provide a set of network infrastructure IRPs to ensure interoperability. These IRPs might be provided by an NE, or an Element Manager (EM), or a Network Manager (NM), or a Sub-Network Manager (SNM). In the same context, a Network Manager (NM) provides a package of end-user functions for management of a network, as to some extent supported by an EM, but it may also involve direct access to the NE. Also in the same context, a Sub-Network Manager (SNM) includes functions that are related to a network model for a set of Network Elements constituting a clearly defined sub-network. This model enables additional functions on the sub-network level such as, typically, in the areas of network topology presentation, alarm correlation, and service impact analysis.

These IRPs are described by a common Naming Convention specification. In this respect, the Unified Modelling Language (UML) notation is used in 3GPP to describe with abstract classes, which are called Managed Object Classes (hereinafter MOC), the containment and naming relationships among the different network entities and equipment. In accordance with the technical specification from 3GPP TS 32.300 "Name Convention for Managed Objects", wherein a name space is a collection of names, the name convention makes use of a hierarchical containment structure, including its simplest one-level form, the so-called flat name space. This name convention does not support an arbitrarily connected name space, or graph structure, in which a named object can be both child and parent of another named object. A containment relationship may describe, for instance, a network signalling card as "contained" in the network element which it is physically plugged into. This type of relationships is also known as naming, because it describes the way to name or locate an instance of any Managed Object Class within a data model, following a hierarchical path of parent and child objects. Generally speaking and for the purpose of the present invention, the term "objects" refer to instances of Object Classes.

Nowadays the Integration Reference Points (IRPs) already defined by 3GPP, under 3GPP TS 32.622, cover three O&M areas: Configuration Management, Fault Management and Performance Management. This document specifies a Network Resource Model, also called Management Information Model, with definitions of managed Object classes and associations diagrams. However, the system disclosed in this document only focuses on the interface between an IRP Manager and an IRP Agent, whereas the interface with a managed entity, such as a Network element, is explicitly left out.

Despite the current trends of using solutions based on a mediation between a provisioning entity and a number of provisioned entities, the mediation arranged for handling one protocol suitable for the provisioning entity and as many different protocols as required by the different provisioned entities, none of the above related art item provides for a solution applicable to different provisioning and provisioned entities, and combinations thereof, in networks of different types that likely include several domains, such solution not essentially coupled with a particular technology, with a particular data modelling embedded in the specific protocol or technology used, or with a particular O&M system. In this respect, the international publication WO-A-97/05703 addresses the problem of interfacing a number of old legacy, non-standard network elements and a TMS management system that eliminates the requirement to develop and install multiple device-specific Q-adaptors. This document proposes a universal agent interposed between a managing entity and a number of managed entities for translating the managed objects between those understood respectively by the managing entity and the managed entities. This sort of solution implies that the universal agent has to be updated any time a new non-standard managed object is coupled to the management system.

It is therefore an object of the present invention to provide a solution applicable to all network domains and interfaces, thus applying to different nodes that likely manage a variety of protocols and data models, and thus harmonising with a common provisioning mechanism.

More specifically, it is an object of the present invention to find a solution for a common provisioning mechanism that may be applied to every point in a network topology where there is a provisioning communication.

It is a further object of the present invention to provide a solution where a Subscription Management is carried out in such a manner that a resulting data model and operations are simple and universal, and support different degrees of complexity for services at diverse provisioned nodes.

It is a still further object of the present invention to provide a Subscription Management that, accomplishing the above objects, harmonizes with the concept of Integration Reference Point (IRP) introduced by 3GPP, within a so-called IRP Generic Network Resource Model, for the O&M areas: Configuration Management, Fault Management and Performance Management.

### SUMMARY OF THE INVENTION

The above objects, among others, are accomplished in accordance with the invention by the provision of a management system, method and means for provisioning services to subscribers of a communication network.

The management system comprising a Management Entity that has a Provisioning Node side intended for provisioning a service, and a number of Managed Entities each one having a Provisioned Node side intended for receiving provisioning orders from the Management Entity.

The Provisioning Node side and the number of Provisioned Node sides in this management system support a Subscription Management Generic Interface (SuM-GI) that includes a SuM-GI Data Model and a number of SuM-GI Operations for managing the Objects Classes in said SuM-GI Data Model.

The Provisioning Node side comprises a SuM-GI Manager for managing subscriptions to services in any Managed Entity by operating on Objects Classes included in the SuM-GI Data Model, and a number of Protocol Adapters for communicating with specific protocol technologies used at each Managed Entity.

The Provisioned Node side comprises a SuM-GI Agent for receiving provisioning orders operating on Object Classes included in the SuM-GI Data Model, and at least one Protocol Adapter for communicating with a particular protocol technology used by the SuM-GI Manager to send provisioning orders.

Thus, at least one Managed Entity in this management system is a Network Element in which a given service is provisioned. Each Network Element has its own internal data model and further comprises a Mapping Module for mapping objects in the SuM-GI Data Model received from a Provisioning Node side to said own internal data model.

Also in this management system, a number of Managed Entities may optionally form a hierarchical Sub-Network Manager structure interposed between a centralized Management Entity, namely a Network Manager, and a number of Network Elements. Each Sub-Network Manager further comprises a Provisioning Node side toward a Managed Entity, this Managed Entity being a Network Element or another Sub-Network Manager.

In other words, each Sub-Network Manager comprises a SuM-GI Manager, a SuM-GI Agent and a number of Protocol Adapters, thus presenting a Provisioned Node side towards a Provisioning Node side at a Network Manager or at another Sub-Network Manager, and a Provisioning Node Side towards a Provisioned Node side at a Network Element or at another Sub-Network Manager.

In particular, a Subscription Management Generic Interface (SuM-GI) Manager at a Provisioning Node side and a SuM-GI Agent at a Provisioned Node side comprise means for mutual assignation of a specific protocol technology for communicating with each other.

A method is also provided by the present invention for provisioning services to subscribers of a communication network. The method applies between a Management Entity that has a Provisioning Node side intended for provisioning a service, and a number of Managed Entities each one having a Provisioned Node side intended for receiving provisioning orders from the Management Entity.

The method comprises the steps of:
- assigning a specific protocol technology for communication between a Subscription Management Generic Interface (SuM-GI) Manager at a Provisioning Node side and each SuM-GI Agent at respective Provisioned Node sides;
- sending provisioning orders from a SuM-GI Manager toward at least one SuM-GI Agent with a number of SuM-GI Operations intended for operating on Object Classes included in a SuM-GI Data Model; and
- determining at a SuM-GI Agent, upon receipt of a provisioning order from a SuM-GI Manager, whether current node is a Network Element (NE) where the service is provisioned or there is at least one lower hierarchical Managed Entity, namely a Sub-Network Manager or a Network Element, where the provisioning order must be submitted.

Next, upon receipt of a provisioning order from a Subscription Management Generic Interface (SuM-GI) Manager in a SuM-GI Agent at a Sub-Network Manager, the method further comprises the steps of:
- transferring the provisioning order received from a first SuM-GI Manager at a Provisioning Node side of a Management Entity or higher hierarchical Managed Entity toward a second SuM-GI Manager at a Provisioning Node side of the current node;
- assigning a specific protocol technology for communication between the second SuM-GI Manager at the Provisioning Node side of the current node and each SuM-GI Agent at respective Provisioned Node sides of lower hierarchical Managed Entities; and
- sending provisioning orders from the second SuM-GI Manager toward at least one SuM-GI Agent at a Provisioned Node side of a lower hierarchical Managed Entity with a number of SuM-GI Operations intended for operating on Object Classes included in a SuM-GI Data Model.

Moreover, upon receipt of a provisioning order from a Subscription Management Generic Interface (SuM-GI) Manager in a SuM-GI Agent at a Network Element, the method further comprises the steps of:
- mapping the provisioning order received from a SuM-GI Manager at a Provisioning Node side with a number of SuM-GI Operations intended for operating on Object Classes included in a SuM-GI Data Model into a number of internal operations intended for operating on an internal data model supported by the current Network Element; and
- acting on the internal data model with the mapped internal operation in order to carry out the provisioning order received from a SuM-GI Manager at a Provisioning Node side.

Furthermore, upon receipt of a provisioning order from a Subscription Management Generic Interface (SuM-GI) Manager in a SuM-GI Agent at a Network Element for which resulting data is expected, the method further comprises the steps of:
- mapping the resulting data from an internal data model into appropriate parameters of a number of SuM-GI Operations intended for operating on Object Classes included in a SuM-GI Data Model; and
- returning provisioning order results from the SuM-GI agent toward the SuM-GI Manager at a Provisioning Node side of a Management Entity or higher hierarchical Managed Entity with appropriate parameters in a number of SuM-GI Operations intended for operating on Object Classes included in a SuM-GI Data Model.

An important feature of the present invention is the provision of a Subscription Management Generic Interface (SuM-GI) that includes a SuM-GI Data Model and SuM-GI Operations intended to act on object classes of said SuM-GI Data Model.

The SuM-GI Data Model comprises any Managed Object Class, or combinations thereof, selected from a group of Object Classes that includes:
- Subscription object class, intended for modeling the agreement or contract established between a subscriber and a service provider and arranged for containing all the information related with the subscription;
- Subscriber object class, intended for identifying a subscriber holding a subscription with a service provider for a given service and arranged for registering a number of users allowed to use said given service;
- ProvidedService object class, intended for modeling a service provider inventory of offered services and arranged for maintaining applicable capabilities of said offered services;
- User object class, intended for identifying a user associated to a given subscriber and arranged for customizing particular user preferences for a given service; and
- UserServicePreferences object class, intended for allowing a number of users associated with a subscriber to have particular service preferences and arranged for containing different service capabilities enabled for each user.

The SuM-GI Operations comprise any Operations, or combinations thereof, selected from groups of operations that include:
- creating, modifying, removing and getting Subscriber;
- creating, modifying, removing and getting User;
- creating, modifying, removing and getting Provided Service.
- creating, modifying, removing and getting Subscription;
- adding, removing and getting User to or from a given Subscription;
- setting and getting User Service Preferences for a user under a given Subscription; and

The Subscription Management Generic Interface (SuM-GI) is arranged for holding specific attributes or characteristics of those objects included in the SuM-GI Data Model in a generic information placeholder associated to each particular object. Thus, additional advantages may be obtained from arranging said Subscription Management Generic Interface (SuM-GI) for allowing each individual SuM-GI Agent to determine whether or not each particular attribute in a list of attributes is applicable in the node where the SuM-GI Agent resides, the applicability depending on a specific internal data model in said node.

Nowadays a foreseeable use of said Subscription Management Generic Interface (SuM-GI) is proposed for operating in accordance with an Integration Reference Point (IRP) specification within an IRP Generic Network Resource Model. To this end, the SuM-GI further comprises any Managed Object Class, or combinations thereof, selected from a group of Object Classes that includes:
- SubscriptionIRP object class, intended for indicating to a SuM-GI Manager the SuM-GI version supported by each particular SuM-GI Agent in a Managed Entity, and thus arranged for comprising a list of the SuM-GI versions supported by known SuM-GI Agents;
- SubscriptionFunction object class, intended for sub-classing Subscription, Subscriber, User, and UserServicePreferences related object classes and arranged for providing attributes that are common to underlying Managed Object Classes; and
- ServiceProviderFunction object class, intended for sub-classing ProvidedService related object classes and arranged for providing attributes that are common to underlying Managed Object Classes.

### BRIEF DESCRIPTION OF DRAWINGS

The features, objects and advantages of the invention will become apparent by reading this description in conjunction with the accompanying drawings, in which:

**FIG. 1** represents a block diagram showing a basic architecture comprising a Provisioning Node responsible for issuing provisioning orders and a number of Provisioned Nodes where service subscriptions are provisioned.

**FIG. 2** represents a block diagram showing a generic architecture including one entity of a hierarchical Sub-Network Manager structure interposed between a Manager entity and a number of Provisioned Nodes.

**FIG. 3** shows a Generic Network Resource Model (NRM) Containment/Naming and Association diagram as included in 3GPP TS 32.622 V4.2.0 (2002-03).

**FIG. 4** presents a resource model with Object Classes included in a Subscription Management Generic Interface (SuM-GI) Data Model in accordance with an aspect of the present invention.

**FIG. 5** shows a use of the resource model in Fig. 4 integrated with the Generic Network Resource Model (NRM) shown in Fig. 3 in accordance with an aspect of the present invention.

### DETAILED DESCRIPTION OF PREFERRED EMBODIMENTS

The following describes the currently preferred embodiments of means, method and system intended for providing a Generic Interface for Subscription Management.

In accordance with one aspect of the present invention, there is provided a solution for service provisioning that is generic and fits any domain, whether telecom, internet, or any service-related domain. This solution can be used in any scenario wherein a management entity is provisioning a given service in a managed entity, allowing potential users of a service to be subscribed to, to provide user preferences or settings for, and to be withdrawn from said service. In this context, the management entity may be regarded as an entity in a network provisioning a service, thus hereinafter referred to as a Provisioning Node, whereas the managed entity may be regarded as an entity in a network where a service is provisioned, and thus hereinafter referred to as a Provisioned Node.

Such solution is achieved within the present invention thanks to a Subscription Management Generic Interface (hereinafter abbreviated as SuM-GI) that is intended for enabling the exchange of information related to provisioning activities between a Provisioning Node and a number of Provisioned Nodes. This Provisioning Node is, generally speaking, the entity in charge of issuing the orders needed to establish a subscription, whereas the Provisioned Node is the entity that contains the subscription related data.

Therefore, the SuM-GI is arranged for modelling the information related to those resources to be managed and the way in which such information may be accessed and manipulated. Such modelling is done in a way that is independent of the technology and distribution used in the implementation of a management system. Thus, the SuM-GI avoids the dependency on both, the technology of the communication protocol used, and the specific service data being provisioned.

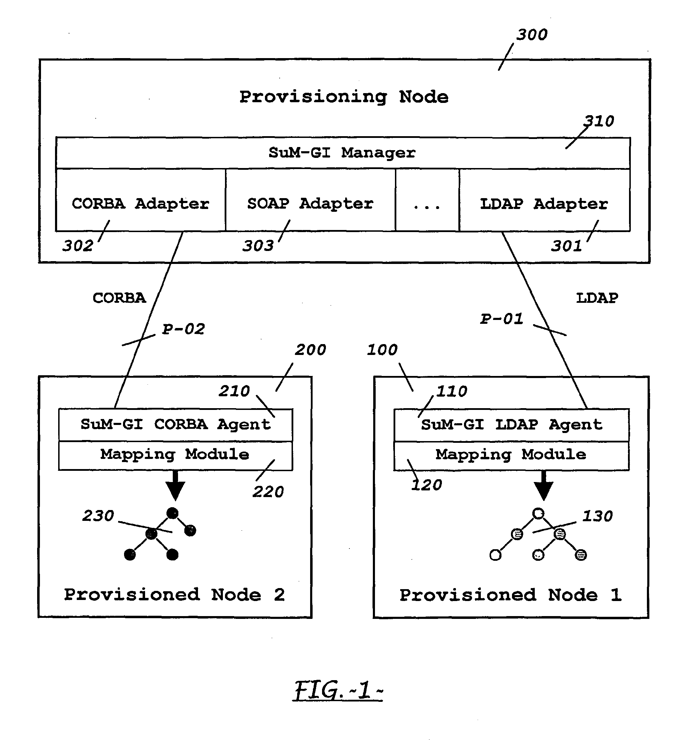

A basic architecture supporting the SuM-GI is shown in Fig. 1 wherein a Provisioning Node (300) acts on two different Provisioned Nodes (100, 200). The Provisioning Node (300) comprises a SuM-GI Manager (310) and a number of Protocol Adapters (301, 302, 303) for communicating with each Provisioned Node (100, 200) with an appropriate protocol technology (P-01, P-02). Each Provisioned Node (100, 200) comprises a particular SuM-GI Agent (110, 210) operating in accordance with the protocol technology (P-01, P-02) for communicating with the respective Provisioned Node (100, 200).

The Provisioning Node is in charge of submitting subscription related orders towards a number of Provisioned Nodes, each of them with its own data model and provisioning technology. Relevant Provisioned Nodes (100, 200) receive these subscription related orders (P-01, P-02) sent by the Provisioning Node (300). In accordance with a preferred embodiment, the SuM-GI Agent (110, 210) receives such orders, interprets them, and executes the corresponding actions in the Provisioned Node.

An advantageous flexibility can be obtained from supporting a number of Protocol Adapters (301, 302, 303) for enabling communications from the SuM-GI Manager towards Provisioned Nodes implementing particular SuM-GI Agents based on vendor-specific protocol technology such as CORBA, LDAP, or others such as Simple Object Access Protocol (SOAP), for example. In this respect, any supplier of a Provisioned Node can freely decide what protocol technology better fits its own internal requirements whereas this choice does not negatively impact on the implementation of the Provisioning node. One fundamental principle for achieving this is to clearly separate the semantic of information definition from the protocols definitions for the external interfaces. If a Provisioning Node needs to speak with a particular Provisioned Node that uses a new technology, a corresponding new technology Protocol Adapter should be incorporated at the Provisioning Node.

Thus, thanks to the Subscription Management Generic Interface (SuM-GI), and more specifically to the generic data model and operations included therein, a Provisioning Node does not need know the details of each particular data model of the different Provisioned Nodes. Further, each Provisioned Node is responsible for mapping a generic data model to its own internal data model in accordance with one aspect of the present invention. Therefore, each Provisioned Node (100, 200) includes a Mapping Module (120, 220). Each particular Mapping Module is in charge of mapping instances of the generic data model received (P-01, P-02) from the Provisioning Node to an internal data model (130, 230) respectively included in each Provisioned Node.

For example, a Provisioning Node (300) wants to create a subscription in a Home Location Register (HLR) of a mobile network, the HLR then being a Provisioned Node for the purpose of the present invention. This exemplary HLR (200) uses CORBA technology for provisioning purposes. The Provisioning Node (300) through the SuM-GI Manager (310) sends a "create subscription" order towards the HLR via a CORBA Adapter (302). Such "create subscription" order is defined through the Subscription Management Generic Interface (SuM-GI) as an Operation over a Managed Object Class called "subscription" in a SuM-GI Data Model that the present invention provides.

Different alternatives are suitable in this example for a SuM-GI Manager to know the protocol technology used by each Provisioned Node. In accordance with a currently preferred embodiment of the present invention, the HLR registers itself as a SuM-GI Agent at the SuM-GI Manager indicating the use of CORBA. In accordance with another embodiment of the present invention, configuration means at each particular Provisioning and Provisioned nodes might also be appropriate for establishing at the SuM-GI Manager the different protocol technologies used by the different Provisioned Nodes.

The "create_subscription" order is received at the HLR via its SuM-GI CORBA Agent (210), which is waiting for subscription related orders. This SuM-GI CORBA Agent (210) receives such order interpreting that actions to create a subscription have to be carried out. At this stage, the SuM-GI CORBA Agent must determine over which Managed Object Classes of the HLR the agent has to operate. Therefore, the SuM-GI CORBA Agent consults the Mapping Module (220) which in turn searches the internal data model (230) at the HLR to identify the particular Managed Object Class, or the specific object, to operate on. Then, the SuM-GI CORBA Agent is enabled to perform the actions required to initiate the subscription.

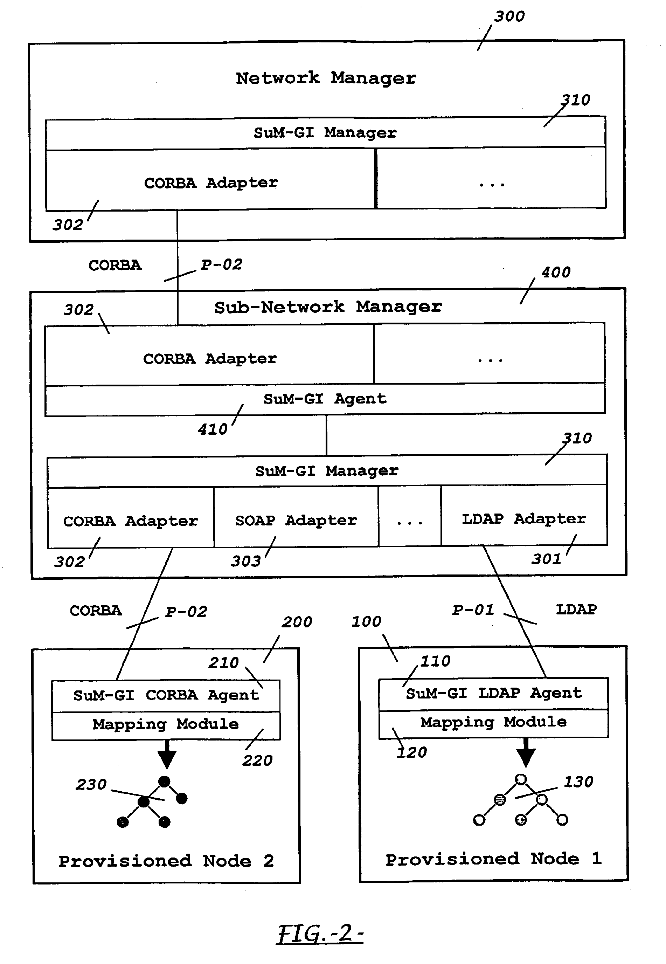

This simple architectural model shown in Fig. 1, wherein a Provisioning Node is directly connected to a number of Provisioned Nodes, may be adapted to other network topologies where another hierarchical network composition is already established. An exemplary embodiment is presented in Fig. 2 showing an applicability of the present invention for a network management architecture following current 3GPP trends. This network management architecture comprises a Network Manager (NM) (300) that provides a package of end-user functions for management of a network and may also involve direct access to Network Elements, a Sub-Network Manager (SNM) (400) that includes functions related to a network model for a set of Network Elements constituting a clearly defined sub-network, and a number of Network Elements (NE) (100, 200) to be managed.

The Network Manager (300) in the topology presented in Fig. 2 behaves as a pure Provisioning Node in accordance with an aspect of the present invention already described. This NM (300) thus includes a SuM-GI Manager (310) and a number of Protocol Adapters (302) for communication with a following hierarchy of managed nodes, which in this network topology correspond to at least one level of Sub-Network Managers (400). Each SNM (400) behaves as a Provisioned Node in respect of the NM (300) and as a Provisioning Node towards a following hierarchy of managed nodes, the latter being Network Elements (100, 200) in Fig. 2 acting as pure Provisioned Nodes.

A Sub-Network Manager (400), which in Fig. 2 is hierarchically located between a pure Provisioning Node (300) and a number of pure Provisioned Nodes (100, 200), thus presents a Provisioned Node side towards the Network Manager (300), and a Provisioning Node side towards the Network Elements (100, 200) to be managed. Therefore, each SNM (400) comprises a number of Protocol Adapters (302) and a SuM-GI Agent (410) for communication with the Network Manager, that is the Provisioned Node side in this SNM. Each SNM (400) further comprises another number of Protocol Adapters (302) and a SuM-GI Manager (310) for communication in Fig. 2 with a Network Element 1 (100) and with a Network Element 2 (200), that is the Provisioning Node side in this SNM.

Each NE (100, 200) includes a SuM-GI Agent (110, 210) based on a particular vendor-specific protocol technology, each SuM-GI Agent for communication with a SuM-GI Manager at a Provisioning Node side. Each NE (100, 200) also includes a Mapping Module (120, 220) for mapping instances of a generic data model received (P-01, P-02) from a Provisioning Node side to an internal data model (130, 230) respectively included in each Provisioned Node. In another embodiment of the present invention, not illustrated in the current drawings, there is provided a general purpose SuM-GI Agent with a specific Protocol Adapter, thus acting in a similar manner as for the SuM-GI Manager.

A sort of management entity like a Sub-Network Manager presenting a Provisioned Node side towards a Provisioning Node, and a Provisioning Node side towards a number of Provisioned Nodes allows to build up a Management system with a hierarchy of multiple management levels. This hierarchical Management system thus comprises a pure Provisioning Node at the highest level, namely a Network Manager (300) with a Provisioning Node side; a number of hierarchically disposed Sub-Network Managers (400), each one with a Provisioned Node side and with a Provisioning Node side; and a number of pure Provisioned Nodes at the lowest level, namely Network Elements (100, 200) with a Provisioned Node side.

The aforementioned generic data model included in the Subscription Management Generic Interface, hereinafter referred to as SuM-GI Data Model, specifies a basic set of Object Classes that, along with a basic set of Operations on said Object Classes, can describe a generic provisioning mechanism in accordance with an aspect of the present invention. This basic model, however, is powerful enough to permit all the transactions related to subscription management to be accomplished.

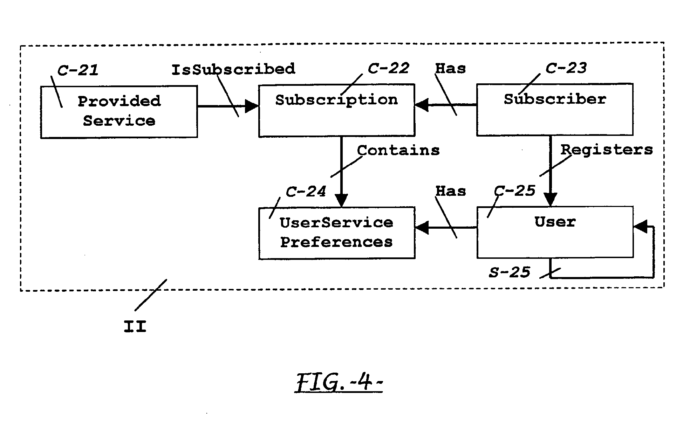

In this respect, a basic set of Object Classes defined in the SuM-GI Data Model is shown in Fig. 4 and comprises: a Subscription class, a UserServicePreferences class, a Subscriber class, a User class and a ProvidedService class.

The Subscription is a central Object Class in the SuM-GI Data Model, and is intended for modeling the agreement or contract established between a subscriber and a service provider. The Subscription class contains all the information related to the subscription, such as identifiers of subscribed services, subscriber identifiers, subscriber preferences, etc. The Subscription class represents a temporal relation between a subscriber and a service provider regarding an offered service, namely a relation between a ProvidedService class and a Subscriber class. A subscriber can have more than one subscription for different services.

The UserServicePreferences class is intended for allowing that a number of users associated with a given subscriber may have their particular service preferences. In other words, particular instances of this object class offer the possibility to have different capabilities enabled for each user. This object class holds a preference matrix formed between users and service capabilities.

A User class is thus related with a Subscription class through the UserServicePreferences class. A user can be associated with more than one subscription, and a subscription can have more than one user declared. The service preferences for a subscriber are kept in the Subscription class, whilst the service preferences for a user are kept in the UserServicePreferences class.

The Subscription Management Generic Interface is arranged for holding specific attributes or characteristics of those Object Classes included in the SuM-GI Data Model in a generic information placeholder associated with each particular object, for example in a list of attributes holding name-value pairs. Each individual SuM-GI Agent is responsible for determining whether or not each particular attribute in the list of attributes is applicable in the node where the SuM-GI Agent resides. The applicability in a node of a certain attribute for a given Object Class included in the SuM-GI Data Model, as determined by the SuM-GI Agent in the node, depends on the specific internal data model in said node.

This is an advantageous feature provided by the present invention since the SuM-GI Agent (110, 210, 410) can describe its own data model by mapping its internal object classes to those object classes included in the SuM-GI Data Model, so that the SuM-GI Manager (310) does not need be changed each time a new agent is introduced into the management system. Moreover, the SuM-GI Agent is free to define any attributes needed for the existing object classes in the SuM-GI Data Model, and is also free to set and handle as many instances of said object classes, as the SuM-GI Agent is able to.

Apart from the above SuM-GI Data Model, the Subscription Management Generic Interface (SuM-GI) also includes a set of basic Operations for allowing the establishment and administration of all the relationships between the Object Classes defined in said SuM-GI Data Model.

Thereby, a communication system supporting the above SuM-GI is enabled to operate on the Subscription class, the ProvidedService class, the Subscriber class, the User class, and on the UserServicePreferences class during the process of creation, retrieval, modification, deletion, activation and deactivation of the corresponding class settings.

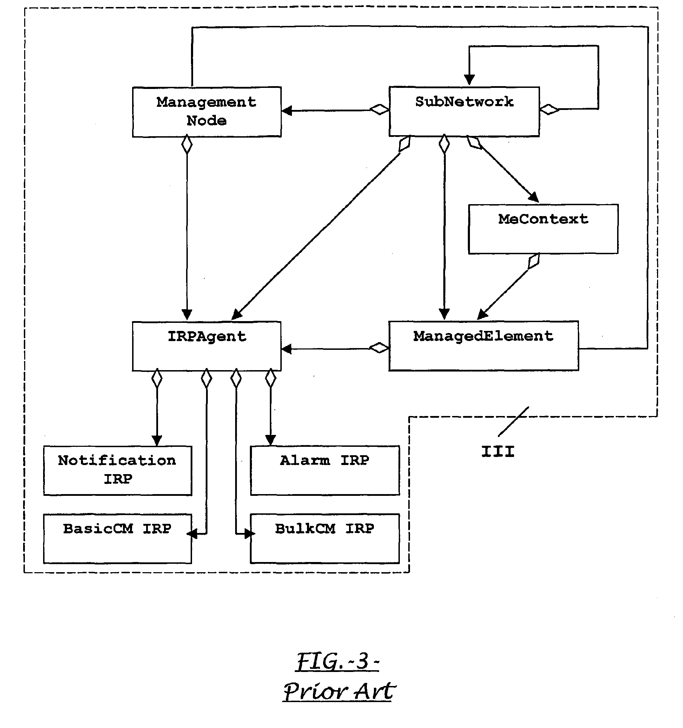

In addition, the SuM-GI Data Model may be represented in terms of object classes and associations following the 3GPP TS 32.622 wherein an "Aggregation by Reference", hollow diamonds following the UML notation, is normally used. As shown in the existing IRP model (Object Model III) shown in Fig. 3, the associations allow the navigability from an associating class to a target class. Navigability is indicated by an open arrow placed on the target end of the association line next to the target class. An association can be unidirectional, namely an arrow in the end next to the target class, or bidirectional, namely without arrows.

The above SuM-GI Data Model following the UML notation (Object Model II) is thus represented in Fig. 4 by its basic set of object classes and relations between them. As shown in Fig. 4, a ProvidedService (C-21) object class is related to a target class Subscription (C-22) with an association "IsSubscribed" whereas a Subscriber (C-23) object class is related to the same target class Subscription (C-22) with an association "Has". The object class Subscriber (C-23) is related to a target class User (C-25) with an association "Registers" that allows having more than one user registered for the same subscriber. A recursive association (S-25) within the User (C-25) object class allows the establishment of hierarchies of users or groups of users. The object class User (C-25) is related to a target class UserServicePreferences (C-24) with an association "Has" whereas the UserServicePreferences (C-24) is also a target class for the object class Subscription (C-22) from which there is an association "Contains".

Further, in order to accomplish the integration of a Subscription Management IRP with the three currently existing O&M areas under "3GPP TS 32.622 v4.2.0 Generic Network Resources IRP: Network Resource Model (Release 4)" (Object Model III) shown in Fig. 3, there are provided three new object classes within the SuM-GI Data Model: a SubscriptionIRP Object Class (C-28) and two new Managed Objects Classes (C-26, C-27). The SubscriptionIRP Object Class (C-28), as any other existing object class aggregated to the Managed Object Class IRPAgent, indicates the capabilities associated with each particular IRPAgent object. In other words, each particular instance of the SubscriptionIRP Object Class (C-28) comprises a list of the IRP versions supported by the IRPAgent. The two new Managed Objects Classes (C-26, C-27), SubscriptionFunction and ServiceProviderFunction, are provided for sub-classing only. Each of these Managed Object Class provides the attributes that are common to certain functional Object Classes, and may be extended in the future if more common characteristics or attributes of functional objects are identified.

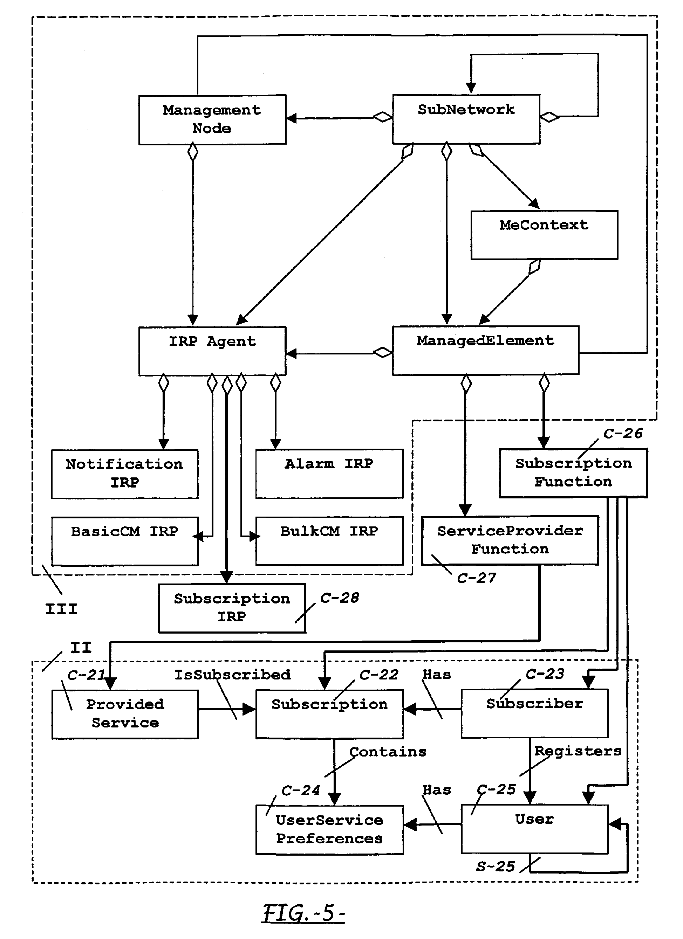

As shown in Fig. 5, the integration of a Subscription Management IRP with the three currently existing O&M areas IRP for 3GPP is achieved by aggregating the above new SubscriptionIRP object class to the IRPAgent object class, this SubscriptionIRP being thus associated to the three Managed Object Class (MOC): ManagementNode, SubNetwork and ManagedElement. In particular, said MOC ManagedElement represents telecommunication equipment or telecommunication management network entities that perform Network Element related functions. Consequently, network nodes making use of the above SubscriptionIRP may be included in this category. Therefore, in accordance with a currently preferred embodiment of the present invention, both SubscriptionFunction and ServiceProviderFunction inherit from the ManagedElement in a manner such that all the managed objects defined in the SubscriptionIRP can be managed by other existing IRPAgents, namely Alarm, Configuration and Notification.

After having described the object classes and associations in the SuM-GI Data Model, the SuM-GI Operations are described following this in order to complete a description of a Subscription Management Generic Interface (SuM-GI) in accordance with currently preferred embodiments of the present invention.

The SuM-GI Operations may be classified depending on the particular object class firstly instanced from the above SubscriptionFunction and ServiceProviderFunction, respectively, which are Subscription (C-22), Subscriber (C-23) and User (C-25) on the one hand, and ProvidedService (C-21) on the other hand. The format indicated for these SuM-GI Operations is merely illustrative and wherein input data are given between brackets and output data follow ":".

### (a) Subscription related SuM-GI Operations:

### (a1) createSubscription (subscriberID, serviceID, attributeListIn ...): subscriptionID, attributeListOut;

This operation creates a subscription and just shows some necessary parameters wherein the *attributeListIn* comprises subscription data and subscriber preferences for the indicated service. The operation returns an identifier for the created subscription, *subscriptionID,* and other relevant information in the *attributeListOut.*

### (a2) modifySubscription (subscriptionID, attributeListIn, ...): attributeListOut ;

This operation modifies the attributes of the subscription, more specifically the subscription data and the service subscriber preferences. By using this operation a subscriber can modify the selection, activation, configuration, or deactivation of capabilities offered for a given subscribed service. For example, if a Health care service is the subscribed service, a Dental service is an option within the Health care service that can be chosen, or not chosen, in the subscription. In particular, *attributeListOut* may indicate detailed reasons of failure.

### (a3) removeSubscription (subscriptionID, . . .) ;

This operation ends a particular subscription.

### (a4) getSubscription (filter, attributeListIn . . .) : subscriptionID_list, attributeListOut;

This operation returns a list of subscriptions, each one with respective identifier and optionally a corresponding list of attribute values associated with each subscription, *attributeListOut,* which are requested in *attributeListIn.* The *filter,* which is used as search criteria for selecting specific subscriptions, can be composed by pairs of attributes and values related to the subscription as part of assertions that may be grouped using logical operators such as "AND" or "OR".

### (a5) addServiceUser (subscriptionID, userID, attributeListIn, ...);

This operation is used to register a new user in a subscription, thus allowing him to use the service subscribed. The *attributeListIn* are the attributes of the subscribed service, and some of these attributes may be configured for said user. User preferences can be configured when the user is added or later with the operation *setUserServicePreferences.* Depending on service provider policy, if user service preferences are not set with this operation, the subscriber preferences set when creating the subscription apply until new user service preferences are set with the operation *setUserServicePreferences.*

### (a6) removeServiceUser (subscriptionID, userID, ...);

This operation is used to withdraw a user from a subscription.

### (a7) getServiceUser (subscriptionID, ...) : userID_list ;

This operation returns the users registered in a certain subscription.

### (a8) setUserServicePreferences (subscriptionID, userID, userPreferences, ...);

This operation configures all attributes of a service customised for a user. The operation also enables or disables capabilities of a subscribed service for a particular user.

### (a9) getUserServicePreferences (subscriptionID, userID, ...): userPreferences;

This operation returns a list of service preferences for a particular user in a given subscription. The service preferences may include the capabilities or features offered by the subscribed service and that are configured for this user.

### (b) Subscriber related SuM-GI Operations:

### (b1) createSubscriber (attributeListIn, ...): subscriberID;

This operation is used to create a subscriber.

### (b2) modifySubscriber (subscriberID, attributeListIn, . . .) : attributeListOut;

This operation modifies subscriber service independent data included in the *attributeListIn.* In particular, *attributeListOut* may indicate detailed reasons of failure.

### (b3) removeSubscriber (subscriberID, ...);

This operation is used to withdraw a subscriber.

### (b4) getSubscriber (filter, attributeListIn, . . .) : subscriberID list, attributeListOut;

This operation returns a list of subscribers with certain characteristics defined in the *filter,* and a list of attribute values, *attributeListOut,* which are requested in *attributeListIn.*

### (c) User related SuM-GI Operations:

### (c1) createUser (attributeListIn, ...): userID;

This operation is used to create a user.

### (c2) modifyUser (userID, attributeListIn, . . .) : attributeListOut;

This operation modifies user service independent data included in the *attributeListIn.* In particular, *attributeListOut* may indicate detailed reasons of failure.

### (c3) removeUser (userID, . . .) ;

This operation is used to withdraw a user.

### (c4) getUser (filter, attributeListIn, . . .) : userID_list, attributeListOut;

This operation returns a list of users with certain characteristics defined in the *filter,* and a list of attribute values, *attributeListOut,* which are requested in *attributeListIn.*

### (d) ProvidedService related SuM-GI Operations:

### (d1) createService (attributeListIn, . . .) : serviceID;

This operation is used to create a service. A given service can contain other services as capabilities of said given service. Those services included in a said given service are included in the above *attributeListIn* parameter.

### (d2) modifyService (serviceID, attributeListIn, ...): attributeListOut;

This operation modifies capabilities of a given service, which are included in *attributeListIn.* In particular, *attributeListOut* may indicate detailed reasons of a failure.

### (d3) removeService (serviceID, ...);

This operation is used to withdraw a service.

### (d4) getService (filter, attributeListIn, ...) : attributeListOut ;

This operation returns information about one or several services with certain characteristics defined in the *filter.* A list of attributes values per service, ordered in *attributeListIn,* is returned in *attributeListOut* containing parameters related with a service, such as read/write or read-only for example. Some of these attributes are optional capabilities or parameters that can be set in the subscription, whereas others can be refined for a particular user with a *setUserServicePreferences* operation.

The above SuM-GI Operations are proposed in accordance with an aspect of the present invention assuming that particular objects of the object class User are directly instanced from the functional object class SubscriptionFunction so that the same instance of a certain user can be shared by more than one subscription. There may be, however, other preferred embodiments wherein a particular object of the object class User is instanced through a particular relationship like Registers from the object class Subscriber. This way, the same instance of a certain user is not shared by more than one subscription. These alternative embodiments, which are not exclusive to each other, do not negatively affect the particular internal data model held at any managed node inasmuch as flexible and coherent mapping modules are provided as well.

The invention is described above in respect of several embodiments in an illustrative and non-restrictive manner. Obviously, many modifications and variations of the present invention are possible in light of the above teachings. The scope of the invention is determined by the claims, and any modification of the embodiments that fall within the scope of these claims is intended to be included therein.

## Claims

1. A Management Entity having a Provisioning Node side (300, 400) intended for provisioning a service towards a Network Element (100, 200) by sending provisioning orders (P-01, P-02), the Management Entity supporting a Subscription Management Generic Interface "SuM-GI" that includes a SuM-GI Data Model, the Management Entity comprising:
- at least one Protocol Adapter (301, 302, 303) for communicating with a specific protocol technology (110, 210) used at the Network Element; and
- a SuM-GI Manager (310) for sending provisioning orders (P-01, P-02) to manage subscriptions to services in the Network Element (100, 200) with a number of SuM-GI Operations operating on Objects Classes included in the SuM-GI Data Model ;
and wherein the SuM-GI Data Model comprises any Object Class, or combinations thereof, selected from a group of Object Classes that includes:
- SubscriptionIRP object class (C-28), intended for indicating to a SuM-GI Manager (310) the SuM-GI version supported by each particular SuM-GI Agent (110, 210, 410) in a Managed Entity, and thus arranged for comprising a list of the SuM-GI versions supported by known SuM-GI Agents;
- SubscriptionFunction object class (C-26), intended for sub-classing Subscription, Subscriber, User, and UserServicePreferences related object classes and arranged for providing attributes that are common to underlying Managed Object Classes; and
- ServiceProviderFunction object class (C-27), intended for sub-classing ProvidedService related object classes and arranged for providing attributes that are common to underlying Managed Object Classes.

2. The Management Entity of claim 1, wherein the SuM-GI Data Model further comprises any Managed Object Class, or combinations thereof, selected from a group of Object Classes that includes:
- Subscription object class (C-22), intended for modeling the agreement or contract established between a subscriber and a service provider and arranged for containing all the information related with the subscription;
- Subscriber object class (C-23), intended for identifying a subscriber holding a subscription with a service provider for a given service and arranged for registering a number of users allowed to use said given service;
- ProvidedService object class (C-21), intended for modeling a service provider inventory of offered services and arranged for maintaining applicable capabilities of said offered services;
- User object class (C-25), intended for identifying a user associated to a given subscriber and arranged for customizing particular user preferences for a given service; and
- UserServicePreferences object class (C-24), intended for allowing a number of users associated with a subscriber to have particular service preferences and arranged for containing different service capabilities enabled for each user.

3. The Management Entity of claim 1, wherein the Subscription Management Generic Interface "SuM-GI" includes a SuM-GI Operation set intended to act on the SuM-GI Data Model and **characterized by** comprising any Operations, or combinations thereof, selected from groups of operations that include:
- creating, modifying, removing and getting Subscriber;
- creating, modifying, removing and getting User;
- creating, modifying, removing and getting Provided Service;
- creating, modifying, removing and getting Subscription;
- adding, removing and getting User to or from a given Subscription; and
- setting and getting User Service Preferences for a user under a given Subscription.

4. The Management Entity of claim 1, wherein both SubscriptionFunction (C-26) and ServiceProviderFunction (C-27) object classes inherit from a Managed Object Class (ManagedElement) representing telecommunication equipment or network element related functions.

5. A Network Element (100, 200) where a service is provisioned to subscribers of a communication network, the Network Element supporting a Subscription Management Generic Interface "SuM-GI" that includes a SuM-GI Data Model, the Network Element comprising:
- at least one Protocol Adapter (110, 210) for communicating with a particular protocol technology (301, 302, 303) used by a Management Entity to send provisioning orders;
- a SuM-GI Agent (110, 210) for receiving provisioning orders with a number of SuM-GI Operations operating on Objects Classes included in the SuM-GI Data Model; and
- a Mapping Module (120, 220) for mapping received instances of the SuM-GI Data Model (P-01, P-02) into an internal data model (130, 230);
and wherein the SuM-GI Data Model comprises any Object Class, or combinations thereof, selected from a group of Object Classes that includes:
- SubscriptionIRP object class (C-28), intended for indicating to a SuM-GI Manager (310) the SuM-GI version supported by the SuM-GI Agent (110, 210);
- SubscriptionFunction object class (C-26), intended for sub-classing Subscription, Subscriber, User, and UserServicePreferences related object classes and arranged for providing attributes that are common to underlying Managed Object Classes; and
- ServiceProviderFunction object class (C-27), intended for sub-classing ProvidedService related object classes and arranged for providing attributes that are common to underlying Managed Object Classes.

6. The Network Element of claim 5, wherein the SuM-GI Data Model further comprises any Managed Object Class, or combinations thereof, selected from a group of Object Classes that includes:
- Subscription object class (C-22), intended for modeling the agreement or contract established between a subscriber and a service provider and arranged for containing all the information related with the subscription;
- Subscriber object class (C-23), intended for identifying a subscriber holding a subscription with a service provider for a given service and arranged for registering a number of users allowed to use said given service;
- ProvidedService object class (C-21), intended for modeling a service provider inventory of offered services and arranged for maintaining applicable capabilities of said offered services;
- User object class (C-25), intended for identifying a user associated to a given subscriber and arranged for customizing particular user preferences for a given service; and
- UserServicePreferences object class (C-24), intended for allowing a number of users associated with a subscriber to have particular service preferences and arranged for containing different service capabilities enabled for each user.

7. The Network Element of claim 5, wherein the Subscription Management Generic Interface "SuM-GI" includes a SuM-GI Operation set intended to act on the SuM-GI Data Model and **characterized by** comprising any Operations, or combinations thereof, selected from groups of operations that include:
- creating, modifying, removing and getting Subscriber;
- creating, modifying, removing and getting User;
- creating, modifying, removing and getting Provided Service;
- creating, modifying, removing and getting Subscription;
- adding, removing and getting User to or from a given Subscription; and
- setting and getting User Service Preferences for a user under a given Subscription.

8. The Network Element of claim 5, wherein both SubscriptionFunction (C-26) and ServiceProviderFunction (C-27) object classes inherit from a Managed Object Class (ManagedElement) representing telecommunication equipment or network element related functions.

9. A method for provisioning services to subscribers of a communication network, the method applying between a Management Entity that has a Provisioning Node side (300) intended for provisioning a service, and a number of Managed Entities each one having a Provisioned Node side (100, 200) intended for receiving provisioning orders (P-01, P-02) from the Management Entity, the Management Entity and the Managed Entities supporting a Subscription Management Generic Interface "SuM-GI" that includes a SuM-GI Data Model, the method comprising the steps of:
- assigning a specific protocol technology for communication between the Provisioning Node side (300) and each Provisioned Node side (100, 200) via specific Protocol Adapters (301, 302, 303);
- sending provisioning orders (P-01, P-02) from a SuM-GI Manager (310) in the Provisioning Node side (300) with a number of SuM-GI Operations intended for operating on Object Classes included in the SuM-GI Data Model;
- receiving provisioning orders (P-01, P-02) at a SuM-GI Agent (110, 210) in the Provisioned Node side (100, 200) of at least one Managed Entity (100, 200) with a number of SuM-GI Operations operating on Objects Classes included in the SuM-GI Data Model; and
- mapping in this Provisioned Node side (120, 220) the provisioning order received from the SuM-GI Manager with the SuM-GI Operations operating on Object Classes of the SuM-GI Data Model into a number of internal operations operating on an internal data model (130, 230) supported by the Managed Entity (100, 200);
and wherein the SuM-GI Data Model comprises any Object Class, or combinations thereof, selected from a group of Object Classes that includes:
- SubscriptionIRP object class (C-28), intended for indicating to a SuM-GI Manager (310) the SuM-GI version supported by the SuM-GI Agent (110, 210);
- SubscriptionFunction object class (C-26), intended for sub-classing Subscription, Subscriber, User, and UserServicePreferences related object classes and arranged for providing attributes that are common to underlying Managed Object Classes; and
- ServiceProviderFunction object class (C-27), intended for sub-classing ProvidedService related object classes and arranged for providing attributes that are common to underlying Managed Object Classes.

10. The method of claim 9, wherein at least one Managed Entity (100, 200) is a Network Element in which a given service is provisioned, and wherein a number of Managed Entities may form a hierarchical Sub-Network Manager (400) structure interposed between a centralized Management Entity (300) acting as a Network Manager, and a number of Network Elements (100, 200), each Sub-Network Manager (400) comprising: a SuM-GI Manager (310), a SuM-GI Agent (410) and a number of Protocol Adapters (301, 302, 303), thus presenting a Provisioned Node side towards a Provisioning Node side (300) at a Network Manager or at another Sub-Network Manager, and a Provisioning Node Side towards a Provisioned Node side (100, 200) at a Network Element or at another Sub-Network Manager.

11. The method of claim 10, wherein upon receipt of a provisioning order from a SuM-GI Manager (310) in a SuM-GI Agent (410) at a Sub-Network Manager (400), the method further comprises the steps of:
- transferring the provisioning order received from a first SuM-GIManager (310) at a Provisioning Node side (300) of a Management Entity or higher hierarchical Managed Entity toward a second SuM-GI Manager (310) at a Provisioning Node side (400) of the current node;
- assigning a specific protocol technology (301, 302, 303) for communication between the second SuM-GI Manager (310) at the Provisioning Node side (400) of the current node and each SuM-GI Agent (110, 210) at respective Provisioned Node sides (100, 200) of lower hierarchical Managed Entities; and
- sending provisioning orders (P-01, P-02) from the second SuM-GI Manager (310) toward at least one SuM-GI Agent (110, 210) at a Provisioned Node side (100, 200) of a lower hierarchical Managed Entity with a number of SuM-GIOperations intended for operating on Object Classes included in a SuM-GI Data Model.

12. The method of claim 9, wherein the SuM-GI Data Model further comprises any Managed Object Class, or combinations thereof, selected from a group of Object Classes that includes:
- Subscription object class (C-22), intended for modeling the agreement or contract established between a subscriber and a service provider and arranged for containing all the information related with the subscription;
- Subscriber object class (C-23), intended for identifying a subscriber holding a subscription with a service provider for a given service and arranged for registering a number of users allowed to use said given service;
- ProvidedService object class (C-21), intended for modeling a service provider inventory of offered services and arranged for maintaining applicable capabilities of said offered services;
- User object class (C-25), intended for identifying a user associated to a given subscriber and arranged for customizing particular user preferences for a given service; and
- UserServicePreferences object class (C-24), intended for allowing a number of users associated with a subscriber to have particular service preferences and arranged for containing different service capabilities enabled for each user.

13. The method of claim 9, wherein the SuM-GI Operations intended to act on a SuM-GI Data Model comprise any Operations, or combinations thereof, selected from groups of operations that include:
- creating, modifying, removing and getting Subscriber;
- creating, modifying, removing and getting User;
- creating, modifying, removing and getting Provided Service.
- creating, modifying, removing and getting Subscription;
- adding, removing and getting User to or from a given Subscription; and
- setting and getting User Service Preferences for a user under a given Subscription;

14. The method of claim 9, wherein the Subscription Management Generic Interface "SUM-GI" is arranged for holding specific attributes or characteristics of those objects included in the SuM-GI Object Model in a generic information placeholder associated to each particular object, and is arranged for allowing each individual SuM-GI Agent to determine whether or not each particular attribute in a list of attributes is applicable in the node where the SuM-GI Agent resides, the applicability depending on a specific internal data model in said node.

## Patentansprüche

1. Verwaltungseinheit mit einer Bereitstellungsknotenseite (300, 400), die zum Bereitstellen eines Dienstes an ein Netzwerkelement (100, 200) durch Senden von Bereitstellungsreihenfolgen (P-01, P-02) vorgesehen ist, wobei die Verwaltungseinheit eine generische Subskriptions-Verwaltungsschnittstelle "SuM-GI - Subscription Management Generic Interface" unterstützt, die ein SuM-GI-Datenmodell umfasst, wobei die Verwaltungseinheit umfasst:
- zumindest einen Protokolladapter (301, 302, 303) zum Kommunizieren mit einer spezifischen Protokolltechnologie (110, 210), die an dem Netzwerkelement verwendet wird; und
- einem SuM-GI-Verwalter (310) zum Senden von Bereitstellungsreihenfolgen (P-01, P-02), um die Subskriptionen an Diensten in dem Netzwerkelement (100, 200) mit einer Anzahl von SuM-GI-Operationen zu verwalten, die auf Objektklassen operieren, die in dem SuM-GI-Datenmodell eingeschlossen sind;
und wobei das SuM-GI-Datenmodell irgendeine Objektklasse oder Kombinationen aus dieser umfasst, die aus einer Gruppe von Objektklassen ausgewählt ist, die umfasst:
- eine SubskriptionsIRP-Objektklasse (C-28), die vorgesehen zum Anzeigen der SuM-GI-Version an einen SuM-GI-Verwalter (310) ist, die von jedem bestimmten SuM-GI-Agenten (110, 210, 410) in einer verwalteten Einheit unterstützt wird und daher angeordnet zum Umfassen einer Liste der SuM-GI-Versionen ist, die von den bekannten SuM-GI-Agenten unterstützt werden;
- eine Subskriptionsfunktions-Objektklasse (C-26), die zum Unterklassifizieren von Subskription, Teilnehmer, Benutzer und Benutzerdiensteinstellungs-bezogenen Objektklassen vorgesehen ist und angeordnet zum Bereitstellen von Attributen ist, die gemeinsam für die zu Grunde liegenden, verwalteten Objektklassen sind; und
- eine Dienstanbieterfunktions-Objektklasse (C-27), die vorgesehen zum Unterklassifizieren angebotener-Dienst-bezogener Objektklassen ist und angeordnet zum Bereitstellen von Attributen ist, die den zu Grunde liegenden, verwalteten Objektklassen gemeinsam sind.

2. Verwaltungseinheit nach Anspruch 1, wobei das SuM-GI-Datenmodell weiter irgendeine verwaltete Objektklasse oder Kombinationen aus dieser umfasst, die aus einer Gruppe von Objektklassen ausgewählt ist, die umfasst:
- eine Subskriptions-Objektklasse (C-22), die zum Modellieren der Übereinkunft oder des Vertrages - vorgesehen ist, der zwischen einem Teilnehmer und einem Dienstanbieter gebildet ist und die angeordnet zum Enthalten all der Information ist, die die Subskription betrifft;
- eine Teilnehmer-Objektklasse (C-23), die zum Identifizieren eines Teilnehmers vorgesehen ist, der eine Subskription bei einem Dienstanbieter für einen gegebenen Dienst besitzt und die angeordnet zum Registrieren einer Anzahl von Benutzern ist, die den gegebenen Dienst verwenden dürfen;
- eine angebotener-Dienst-Objektklasse (C-21), die zum Modellieren eines Dienstanbieter-Inventars an angebotenen Diensten vorgesehen ist und angeordnet zum Aufrechterhalten anwendbarer Fähigkeiten der angebotenen Dienste ist;
- eine Benutzer-Objektklasse (C-25), die zum Identifizieren eines Benutzers vorgesehen ist, der mit einem gegebenen Teilnehmer verknüpft ist und angeordnet zum Anpassen bestimmter Benutzereinstellungen für einen gegebenen Dienst ist; und
- eine Benutzerdiensteinstellungen-Objektklasse (C-24), die vorgesehen ist, um es einer Anzahl von Benutzern, die mit einem Teilnehmer verknüpft sind, zu erlauben, bestimmte Diensteinstellungen zu haben und angeordnet zum Enthalten unterschiedlicher Dienstfähigkeiten ist, die für jeden Benutzer freigegeben sind.

3. Verwaltungseinheit nach Anspruch 1, wobei die generische Subskriptions-Verwaltungsschnittstelle "SuM-GI" einen SuM-GI-Operations-Satz umfasst, der vorgesehen ist, auf dem SuM-GI-Datenmodell zu agieren und **gekennzeichnet durch** Umfassen irgendwelcher Operationen oder Kombinationen aus diesen, die aus der Gruppe von Operationen ausgewählt sind, die umfassen:
- Erzeugen, Modifizieren, Entfernen und Erhalten eines Teilnehmers;
- Erzeugen, Modifizieren, Entfernen und Erhalten eines Benutzers;
- Erzeugen, Modifizieren, Entfernen und Erhalten eines angebotenen Dienstes;
- Erzeugen, Modifizieren, Entfernen und Erhalten einer Subskription;
- Hinzufügen, Entfernen und Erhalten eines Benutzers für oder von einer gegebenen Subskription;
- Setzen und Erhalten von Benutzerdiensteinstellungen für einen Benutzer unter einer gegebenen Subskription.

4. Verwaltungseinheit nach Anspruch 1, wobei sowohl Subskriptionsfunktions- (C-26) und Dienstanbieterfunktions- (C-27) Objektklassen von einer verwalteten Objektklasse (verwaltetes Element) erben, die eine Telekommunikationsausrüstungs- oder Netzwerkelement-bezogene Funktionen darstellt.

5. Netzwerkelement (100, 200), bei dem ein Dienst an Teilnehmer eines Kommunikations-Netzwerkes bereitgestellt wird, wobei das Netzwerkelement eine generische Subskriptions-Verwaltungsschnittstelle "SuM-GI" umfasst, die ein SuM-GI-Datenmodell umfasst, wobei das Netzwerkelement umfasst:
- zumindest einen Protokolladapter (110, 210) zum Kommunizieren mit einer bestimmten Protokolltechnologie (301, 302, 303), die von einer Verwaltungseinheit verwendet wird, um Bereitstellungsreihenfolgen zu senden;
- einem SuM-GI-Agenten (110, 210) zum Empfangen von Bereitstellungsreihenfolgen mit einer Anzahl von SuM-GI-Operationen, die auf Objektklassen operieren, die in dem SuM-GI-Datenmodell eingeschlossen sind; und
- einem Abbildungsmodul (120, 220) zum Abbilden empfangener Instanzen des SuM-GI-Datenmodells (P-01, P-02) in ein internes Datenmodell (130, 230);
und wobei das SuM-GI-Datenmodell irgendeine Objektklasse oder Kombinationen aus dieser umfasst, die aus einer Gruppe von Objektklassen ausgewählt sind, die umfasst:
- eine SubskriptionsIRP-Objektklasse (C-28), die zum Anzeigen der SuM-GI-Version an den SuM-GI-Verwalter vorgesehen ist, die von dem SuM-GI-Agenten (110, 210) unterstützt ist;
- eine Subskriptions-Funktions-Objektklasse (C-26), die zum Unterklassifizieren von Subskription, Teilnehmer, Benutzer und Benutzerdiensteinstellungs-bezogenen Objektklassen vorgesehen ist und angeordnet zum Bereitstellen von Attributen ist, die den zu Grunde liegenden, verwalteten Objektklassen gemeinsam sind; und
- eine Dienstanbieterfunktions-Objektklasse (C-27), die zum Unterklassifizieren angebotener-Dienstbezogener Objektklassen ist und angeordnet zum Bereitstellen von Attributen ist, die den zu Grunde liegenden, verwalteten Objektklassen gemeinsam sind.

6. Netzwerkelement nach Anspruch 5, wobei das SuM-GI-Datenmodell weiter irgendeine verwaltete Objektklasse oder Kombinationen aus diesen umfasst, die aus einer Gruppe von Objektklassen ausgewählt ist, die umfasst:
- eine Subskriptions-Objektklasse (C-22), die zum Modellieren der Übereinkunft oder des Vertrages vorgesehen ist, der zwischen einem Teilnehmer und einem Dienstanbieter gebildet ist und die angeordnet zum Enthalten all der Information ist, die die Subskription betrifft;
- eine Teilnehmer-Objektklasse (C-23), die zum Identifizieren eines Teilnehmers vorgesehen ist, der eine Subskription bei einem Dienstanbieter für einen gegebenen Dienst besitzt und die angeordnet zum Registrieren einer Anzahl von Benutzern ist, die den gegebenen Dienst verwenden dürfen;
- eine angebotener-Dienst-Objektklasse (C-21), die zum Modellieren eines Dienstanbieter-Inventars an angebotenen Diensten vorgesehen ist und angeordnet zum Aufrechterhalten anwendbarer Fähigkeiten der angebotenen Dienste ist;
- eine Benutzer-Objektklasse (C-25), die zum Identifizieren eines Benutzers vorgesehen ist, der mit einem gegebenen Teilnehmer verknüpft ist und angeordnet zum Anpassen bestimmter Benutzereinstellungen für einen gegebenen Dienst ist; und
- eine Benutzerdiensteinstellungen-Objektklasse (C-24), die vorgesehen ist, um es einer Anzahl von Benutzern, die mit einem Teilnehmer verknüpft sind, zu erlauben, bestimmte Diensteinstellungen zu haben und angeordnet zum Enthalten unterschiedlicher Dienstfähigkeiten ist, die für jeden Benutzer freigegeben sind.

7. Netzwerkelement nach Anspruch 5, wobei die generische Teilnehmer-Verwaltungsschnittstelle "SuM-GI" einen SuM-GI-Operations-Satz umfasst, der vorgesehen ist, auf dem SuM-GI-Datenmodell zu agieren und **gekennzeichnet durch** Umfassen irgendwelcher Operationen oder Kombinationen aus diesen ist, die aus einer Gruppe von Operationen ausgewählt sind, die um umfasst:
- Erzeugen, Modifizieren, Entfernen und Erhalten eines Teilnehmers;
- Erzeugen, Modifizieren, Entfernen und Erhalten eines Benutzers;
- Erzeugen, Modifizieren, Entfernen und Erhalten eines angebotenen Dienstes;
- Erzeugen, Modifizieren, Entfernen und Erhalten einer Subskription;
- Hinzufügen, Entfernen und Erhalten eines Benutzers für oder von einer gegebenen Subskription;
- Setzen und Erhalten von Benutzerdiensteinstellungen für einen Benutzer unter einer gegebenen Subskription.

8. Netzwerkelement nach Anspruch 5, wobei sowohl Subskriptionsfunktions- (C-26) und Dienstanbieterfunktions- (C-27) Objektklassen von einer verwalteten Objektklasse (verwaltetes Element) erben, die eine Telekommunikationsausrüstungs- oder Netzwerkelement-bezogene Funktionen darstellt.

9. Verfahren zum Bereitstellen von Diensten an Teilnehmer eines Kommunikationsnetzwerks, wobei das Verfahren zwischen einer Verwaltungseinheit, die eine Bereitstellungsknotenseite (300) aufweist, die zum Bereitstellen eines Dienstes vorgesehen ist, und einer Anzahl von verwalteten Einheiten angewendet wird, von denen jede eine bereitgestellte Knotenseite (100, 200) aufweist, die zum Empfangen von Bereitstellungsreihenfolgen (P-01, P-02) von der Verwaltungseinheit vorgesehen ist, wobei die Verwaltungseinheit und die verwalteten Einheiten eine generische Subskriptians-Verwaltungsschnittstelle "SuM-GI" unterstützen, die ein SuM-GI-Datenmodell einschließt, wobei das Verfahren die Schritte umfasst:
- Zuordnen einer spezifischen Protokolltechnologie für eine Kommunikation zwischen der bereitstellenden Knotenseite (300) und jeder bereitgestellten Knotenseite (100, 200) über spezifische Protokolladapter (301, 302, 303);
- Senden von Bereitstellungsreihenfolgen ((P-01, P-02) von einem SuM-GI-Verwalter (310) in der bereitstellenden Knotenseite (300) mit einer Anzahl von SuM-GI-Operationen, die zum Operieren auf Objektklassen vorgesehen sind, die in dem SuM-GI-Datenmodell eingeschlossen sind;
- Empfangen von Bereitstellungsreihenfolgen (P-01, P-2) bei einem SuM-GI-Agenten (110, 210) in der bereitgestellten Knotenseite (100, 200) von zumindest einer verwalteten Einheit (100, 200) mit einer Anzahl von SuM-GI-Operationen, die auf Objektklassen operieren, die in dem SuM-GI-Datenmodell eingeschlossen sind; und
- Abbilden in dieser bereitgestellten Knotenseite (120, 220) der Bereitstellungsreihenfolge, die von dem SuM-GI-Verwalter mit den SuM-GI-Operationen empfangen ist, die auf Objektklassen des SuM-GI-Datenmodells operieren, in eine Anzahl von internen Operationen, die auf einem internen Datenmodell (130, 230) arbeiten, das durch die verwaltete Einheit (100, 200) unterstützt ist;
und wobei das SuM-GI-Datenmodell irgendeine Objektklasse oder Kombinationen von dieser umfasst, die aus einer Gruppe von Objektklassen ausgewählt ist, die umfasst:
- eine SubskriptionsIRP-Objektklasse (C-28), die zum Anzeigen der SuM-GI-Version an den SuM-GI-Verwalter vorgesehen ist, die von dem SuM-GI-Agenten (110, 210) unterstützt ist;
- eine Subskriptions-Funktions-Objektklasse (C-26), die zum Unterklassifizieren von Subskription, Teilnehmer, Benutzer und Benutzerdiensteinstellungs-bezogenen Objektklassen vorgesehen ist und angeordnet zum Bereitstellen von Attributen ist, die den zu Grunde liegenden, verwalteten Objektklassen gemeinsam sind; und
- eine Dienstanbieterfunktions-Objektklasse (C-27), die zum Unterklassifizieren angebotener-Dienstbezogener Objektklassen ist und angeordnet zum Bereitstellen von Attributen ist, die den zu Grunde liegenden, verwalteten Objektklassen gemeinsam sind.

10. Verfahren nach Anspruch 9, wobei zumindest eine verwaltete Einheit (100, 200) ein Netzwerkelement ist, in dem ein gegebener Dienst bereitgestellt ist und wobei eine Anzahl von verwalteten Einheiten eine hierarchische Unternetzwerk-Verwalterstruktur (400) bilden kann, die zwischen einer zentralisierten Verwaltungseinheit (300), die als ein Netzwerk-Verwalter agiert, und einer Anzahl von Netzwerkelementen (100, 200) angeordnet ist, wobei jeder Unternetzwerk-Verwalter (400) umfasst: einen SuM-GI-Verwalter (310), einen SuM-GI-Agenten (410) und eine Anzahl von Protokolladaptern (301, 302, 303), die **dadurch** eine bereitgestellte Knotenseite an die bereitstellende Knotenseite (300) bei einem Netzwerk-Verwalter oder bei einem anderen Unternetzwerk-Verwalter darstellen und eine bereitstellende Knotenseite an eine bereitgestellte Knotenseite (100, 200) bei einem Netzwerkelement oder bei einem anderen Unternetzwerk-Verwalter.

11. Verfahren nach Anspruch 10, wobei auf Empfang einer Bereitstellungsreihenfolge von einem SuM-GI-Verwalter (310) in einem SuM-GI-Agenten (410) bei einem Unternetzwerk-Verwalter (400) hin, das Verfahren weiter die Schritte umfasst:
- Übertragen der Bereitstellungsreihenfolge, die von einem ersten SuM-GI-Verwalter (310) bei einer bereitstellenden Knotenseite (300) einer Verwaltungseinheit oder einer höher-hierarchischen verwalteten Einheit empfangen ist, an einen zweiten SuM-GI-Verwalter (310) an einer bereitstellenden Knotenseite (400) des gegenwärtigen Knotens;
- Zuordnen einer spezifischen Protokolltechnologie (301, 302, 303) zur Kommunikation zwischen dem zweiten SuM-GI-Verwalter (310) an der bereitstellenden Knotenseite (400) des gegenwärtigen Knotens und jedem SuM-GI-Agenten (110, 210) bei den jeweiligen bereitgestellten Knotenseiten (100, 200) der niedrigeren hierarchisch verwalteten Einheiten; und
- Senden von Bereitstellungsreihenfolgen (P-01, P-02) von dem zweiten SuM-GI-Verwalter (310) zu zumindest einem SuM-GI-Agenten (110, 210) an der bereitgestellten Knotenseite (100, 200) einer niedrigeren hierarchisch verwalteten Einheit mit einer Anzahl von Sum-GI-Operationen, die zum Operieren auf Objektklassen vorgesehen sind, die in einem SuM-GI-Datenmodell eingeschlossen sind.

12. Verfahren nach Anspruch 9, wobei das SuM-GI-Datenmodell weiter irgendeine verwaltete Objektklasse oder Kombinationen aus dieser umfasst, die aus einer Gruppe von Objektklassen ausgewählt ist, die umfasst:
- eine Subskriptions-Objektklasse (C-22), die zum Modellieren der Übereinkunft oder des Vertrages vorgesehen ist, der zwischen einem Teilnehmer und einem Dienstanbieter gebildet ist und die angeordnet zum Enthalten all der Information ist, die die Subskription betrifft;
- eine Teilnehmer-Objektklasse (C-23), die zum Identifizieren eines Teilnehmers vorgesehen ist, der eine Subskription bei einem Dienstanbieter für einen gegebenen Dienst besitzt und die angeordnet zum Registrieren einer Anzahl von Benutzern ist, die den gegebenen Dienst verwenden dürfen;
- eine angebotener-Dienst-Objektklasse (C-21), die zum Modellieren eines Dienstanbieter-Inventars an angebotenen Diensten vorgesehen ist und angeordnet zum Aufrechterhalten anwendbarer Fähigkeiten der angebotenen Dienste ist;
- eine Benutzer-Objektklasse (C-25), die zum Identifizieren eines Benutzers vorgesehen ist, der mit einem gegebenen Teilnehmer verknüpft ist und angeordnet zum Anpassen bestimmter Benutzereinstellungen für einen gegebenen Dienst ist; und
- eine Benutzerdiensteinstellungen-Objektklasse (C-4), die vorgesehen ist, um es einer Anzahl von Benutzern, die mit einem Teilnehmer verknüpft sind, zu erlauben, bestimmte Diensteinstellungen zu haben und angeordnet zum Enthalten unterschiedlicher Dienstfähigkeiten ist, die für jeden Benutzer freigegeben sind.

13. Verfahren nach Anspruch 9, wobei die SuM-GI-Operationen, die vorgesehen sind, auf einem SuM-GI-Datenmodell zu agieren, irgendwelche Operationen oder Kombinationen aus diesen umfassen, die aus Gruppen von Operationen ausgewählt sind, die umfassen:
- Erzeugen, Modifizieren, Entfernen und Erhalten eines Teilnehmers;
- Erzeugen, Modifizieren, Entfernen und Erhalten eines Benutzers;
- Erzeugen, Modifizieren, Entfernen und Erhalten eines angebotenen Dienstes;
- Erzeugen, Modifizieren, Entfernen und Erhalten einer Subskription;
- Hinzufügen, Entfernen und Erhalten eines Benutzers für oder von einer gegebenen Subskription;
- Setzen und Erhalten von Benutzerdiensteinstellungen für einen Benutzer unter einer gegebenen Subskription.

14. Verfahren nach Anspruch 9, wobei die generische Subskriptions-Verwaltungsschnittstelle "SuM-GI" angeordnet zum Halten spezifischer Attribute oder Eigenschaften derjenigen Objekte ist, die in dem SuM-GI-Objektmodell in einem generischen Informations-Platzhalter eingeschlossen sind, der mit jedem bestimmten Objekt verknüpft ist und angeordnet ist, es jedem einzelnen SuM-GI-Agenten zu erlauben, zu bestimmen, ob oder ob nicht jedes bestimmte Attribut in einer Liste von Attributen in dem Knoten anwendbar ist, in dem der SuM-GI-Agent innewohnt, wobei die Anwendbarkeit von einem spezifischen, internen Datenmodell in dem Knoten abhängt.

## Revendications

1. Entité de Gestion ayant un côté de Noeud d'Approvisionnement (300, 400) destiné à approvisionner un service vis-à-vis d'un Elément de Réseau (100, 200), en envoyant des ordres d'approvisionnement (P-01, P-02), l'Entité de Gestion supportant une Interface Générique de Gestion d'Abonnements, "SuM-GI" (Subscription Management Generic Interface) qui inclut un Modèle de Données de SuM-GI, l'Entité de gestion comprenant :
- au moins un Adaptateur de Protocole (301, 302, 303) pour communiquer avec une technique de protocole spécifique (110, 210) utilisée à l'Elément de Réseau ; et
- un Gestionnaire de SuM-GI (310) pour envoyer des ordres d'approvisionnement (P-01, P-02) pour gérer des abonnements à des services dans l'Elément de Réseau (100, 200), avec un certain nombre d'Opérations de SuM-GI travaillant sur des Classes d'Objets incluses dans le Modèle de Données de SuM-GI ; et dans lequel le Modèle de Données de SuM-GI comprend toute Classe d'Objet, ou combinaisons de celle-ci, sélectionnée dans un groupe de Classes d'Objets qui inclut :
- une classe d'objet SubscriptionIRP (IRP d'Abonnement) (C-28), destinée à indiquer à un Gestionnaire de SuM-GI (310) la version de SuM-GI supportée par chaque agent de SuM-GI particulier (110, 210, 410) dans une Entité Gérée, et donc agencée de façon à comprendre une liste des versions de SuM-GI supportées par des agents de SuM-GI connus ;
- une classe d'objet SubscriptionFunction (Fonction d'Abonnement) (C-26), destinée à contenir, en tant que sous-classes, des classes d'objets associées Subscription (Abonnement), Subscriber (Abonné), User (Utilisateur) et UserServicePreferences (Préférences de Services d'Utilisateur), et agencée pour fournir des attributs qui sont communs à des Classes d'Objets Gérés sous-jacentes ; et
- une classe d'objet ServiceProviderFunction (Fonction de Fournisseur de Services) (C-27), destinée à contenir, en tant que sous-classes, des classes d'objets associées ProvidedService (Service Fourni), et agencée pour fournir des attributs qui sont communs à des Classes d'Objets Gérés sous-jacentes.

2. Entité de Gestion selon la revendication 1, dans laquelle le Modèle de Données de SuM-GI comprend en outre toute Classe d'Objet Géré, ou des combinaisons de celle-ci, sélectionnée dans un groupe de Classes d'Objets qui comprend :
- une classe d'objet Subscription (Abonnement) (C-22), destinée à modéliser l'accord ou le contrat établi entre un abonné et un fournisseur de services, et agencée pour contenir toute l'information liée à l'abonnement ;
- une classe d'objet Subscriber (Abonné) (C-23), destinée à identifier un abonné possédant un abonnement chez un fournisseur de services pour un service donné, et agencée pour enregistrer un nombre d'utilisateurs autorisés à utiliser ledit service donné ;
- une classe d'objet ProvidedService (Service Fourni) (C-21), destinée à modéliser une liste de services offerts d'un fournisseur de services, et agencée pour entretenir des capacités applicables desdits services offerts ;
- une classe d'objet User (Utilisateur) (C-25), destinée à identifier un utilisateur associé à un abonné donné, et agencée pour personnaliser des préférences d'utilisateur particulières pour un service donné ; et
- une classe d'objet UserServicePreferences (Préférences de Services d'Utilisateur) (C-24), destinée à permettre à un certain nombre d'utilisateurs associés à un abonné d'avoir des préférences de service particulières, et agencée pour contenir différentes capacités de service activées pour chaque utilisateur.

3. Entité de Gestion selon la revendication 1, dans laquelle l'Interface Générique de Gestion d'Abonnement "SuM-GI" comprend un ensemble d'Opérations de SuM-GI destiné à agir sur le Modèle de Données de SuM-GI, et **caractérisé en ce qu'**il comprend n'importe quelles Opérations, ou combinaisons de celles-ci, sélectionnées dans des groupes d'opérations qui incluent :
- créer, modifier, supprimer et obtenir Subscriber ;
- créer, modifier, supprimer et obtenir User ;
- créer, modifier, supprimer et obtenir ProvidedService ;
- créer, modifier, supprimer et obtenir Subscription ;
- ajouter, supprimer et obtenir User en relation avec une classe Subscription donnée ; et
- établir et obtenir User Service Preferences pour un utilisateur sous une classe Subscription donnée.

4. Entité de Gestion selon la revendication 1, dans laquelle à la fois les classes d'objets SubscriptionFunction (C-26) et ServiceProviderFunction (C-27) héritent d'une Classe d'Objet Géré (ManagedElement) (Elément Géré) représentant des fonctions liées à des équipements de télécommunication ou des éléments de réseau.

5. Elément de Réseau (100, 200) dans lequel un service est approvisionné pour des abonnés d'un réseau de communication, l'Elément de Réseau supportant une Interface Générique de Gestion d'Abonnements, "SuM-GI", qui inclut un Modèle de Données de SuM-GI, l'Elément de Réseau comprenant :
- au moins un Adaptateur de Protocole (110, 210) pour communiquer avec une technologie de protocole particulière (301, 302, 303) utilisée par une Entité de Gestion pour envoyer des ordres d'approvisionnement ;
- un Agent de SuM-GI (110, 210) pour recevoir des ordres d'approvisionnement avec un certain nombre d'Opérations de SuM-GI travaillant sur des Classes d'Objets incluses dans le Modèle de Données de SuM-GI ; et
- un Module de Mappage (120, 220) pour mapper vers un modèle de données interne (130, 230) des instances reçues du Modèle de Données de SuM-GI (P-01, P-02) ;
et dans lequel le Modèle de Données de SuM-GI comprend toute Classe d'Objet, ou des combinaisons de celle-ci, sélectionnée dans un groupe de Classes d'Objets qui comprend :
- une classe d'objet SubscriptionIRP (C-28), destinée à indiquer à un Gestionnaire de SuM-GI (310) la version de SuM-GI supportée par l'agent de SuM-GI (110, 210) ;
- une classe d'objet SubscriptionFunction (C-26), destinée à contenir, en tant que sous-classes, des classes d'objets associées Subscription, Subscriber, User et UserServicePreferences, et agencée pour fournir des attributs qui sont communs à des Classes d'Objets Gérés sous-jacentes ; et
- une classe d'objet ServiceProviderFunction (C-27), destinée à contenir, en tant que sous-classes, des classes d'objets associées ProvidedService, et agencée pour fournir des attributs qui sont communs à des Classes d'Objets Gérés sous-jacentes.

6. Elément de Réseau selon la revendication 5, dans lequel le Modèle de Données de SuM-GI comprend en outre toute Classe d'Objet Géré, ou des combinaisons de celle-ci, sélectionnée dans un groupe de Classes d'objets qui comprend :
- une classe d'objet Subscription (C-22), destinée à modéliser l'accord ou le contrat établi entre un abonné et un fournisseur de services, et agencée pour contenir toute l'information liée à l'abonnement ;
- une classe d'objet Subscriber (C-23), destinée à identifier un abonné possédant un abonnement chez un fournisseur de services pour un service donné, et agencée pour enregistrer un nombre d'utilisateurs autorisés à utiliser ledit service donné ;
- une classe d'objet ProvidedService (C-21), destinée à modéliser une liste de services offerts d'un fournisseur de services, et agencée pour entretenir des capacités applicables desdits services offerts ;
- une classe d'objet User (C-25), destinée à identifier un utilisateur associé à un abonné donné, et agencée pour personnaliser des préférences d'utilisateur particulières pour un service donné ; et
- une classe d'objet UserServicePreferences (C-24), destinée à permettre à un certain nombre d'utilisateurs associés à un abonné d'avoir des préférences de service particulières, et agencée pour contenir différentes capacités de service activées pour chaque utilisateur.

7. Elément de Réseau selon la revendication 5, dans lequel l'Interface Générique de Gestion d'Abonnements "SuM-GI" Il comprend un ensemble d'Opérations de SuM-GI destiné à agir sur le Modèle de Données de SuM-GI, et **caractérisé en ce qu'**il comprend n'importe quelles Opérations, ou combinaisons de celles-ci, sélectionnées dans des groupes d'opérations qui incluent :
- créer, modifier, supprimer et obtenir Subscriber ;
- créer, modifier, supprimer et obtenir User ;
- créer, modifier, supprimer et obtenir ProvidedService ;
- créer, modifier, supprimer et obtenir Subscription ;
- ajouter, supprimer et obtenir User en relation avec une classe Subscription donnée ; et
- établir et obtenir User Service Preferences pour un utilisateur sous une classe Subscription donnée.

8. Elément de Réseau selon la revendication 5, dans lequel à la fois les classes d'objets SubscriptionFunction (C-26) et ServiceProviderFunction (C-27) héritent d'une Classe d'Objet Géré (ManagedElement) représentant des fonctions liées à des équipements de télécommunication ou des éléments de réseau.

9. Procédé pour approvisionner des services vis-à-vis d'abonnés d'un réseau de communication, le procédé s'appliquant entre une Entité de Gestion qui a un côté de Noeud d'Approvisionnement (300) destiné à approvisionner un service, et un certain nombre d'Entités Gérées ayant chacune un côté de Noeud Approvisionné (100, 200) destiné à recevoir des ordres d'approvisionnement (P-01, P-02) provenant de l'Entité de Gestion, l'Entité de Gestion et les Entités Gérées supportant une Interface Générique de Gestion d'Abonnements "SuM-GI" qui inclut un Modèle de Données de Sum-GI, le procédé comprenant les étapes suivantes :
- assigner une technologie de protocole spécifique pour la communication entre le côté de Noeud d'Approvisionnement et chaque côté de Noeud Approvisionné (100, 200) par l'intermédiaire d'Adaptateurs de Protocole spécifiques (301, 302, 303) ;
- envoyer des ordres d'approvisionnement (P-01, P-02) à partir d'un Gestionnaire de SuM-GI (310) du côté de Noeud d'Approvisionnement (300), avec un certain nombre d'Opérations de SuM-GI destinées à travailler sur des Classes d'Objets incluses dans le Modèle de Données de SuM-GI ;
- recevoir des ordres d'approvisionnement (P-01, P-02) à un agent de SuM-GI (110, 210) dans le côté de Noeud Approvisionné (100, 200) d'au moins une Entité Gérée (100, 200), avec un certain nombre d'Opérations de SuM-GI travaillant sur des Classes d'Objets incluses dans le Modèle de Données de SUM-GI ; et
- mapper dans ce côté de Noeud Approvisionné (120, 220) l'ordre d'approvisionnement reçu du Gestionnaire de SuM-GI, avec les opérations de SuM-GI travaillant sur des Classes d'objets du Modèle de Données de SuM-GI, vers un certain nombre d'opérations internes travaillant sur un modèle de données interne (130, 230) supporté par l'Entité Gérée (100, 200) ;
et dans lequel le Modèle de Données de SuM-GI comprend toute Classe d'Objet, ou des combinaisons de celle-ci, sélectionnée dans un groupe de Classes d'Objets qui comprend :
- une classe d'objet SubscriptionIRP (C-28), destinée à indiquer à un Gestionnaire de SuM-GI (310) la version de SuM-GI supportée par l'agent de SuM-GI (110, 210) ;
- une classe d'objet SubscriptionFunction (C-26), destinée à contenir, en tant que sous-classes, des classes d'objets associées Subscription, Subscriber, User et UserServicePreferences, et agencée pour fournir des attributs qui sont communs à des Classes d'Objets Gérés sous-jacentes; et
- une classe d'objet ServiceProviderFunction (C-27), destinée à contenir, en tant que sous-classes, des classes d'objets associées ProvidedService, et agencée pour fournir des attributs qui sont communs à des Classes d'Objets Gérés sous-jacentes.

10. Procédé selon la revendication 9, dans lequel au moins une Entité Gérée (100, 200) est un Elément de Réseau dans lequel un service donné est approvisionné, et dans lequel un certain nombre d'Entités Gérées peuvent former une structure de Gestionnaire de Sous-Réseau hiérarchique (400) interposée entre une Entité de Gestion (300) centralisée fonctionnant comme un Gestionnaire de Réseau, et un certain nombre d'Eléments de Réseau (100, 200), chaque Gestionnaire de Sous-Réseau (400) comprenant :
un Gestionnaire de SuM-GI (310), un Agent de SuM-GI (410) et un certain nombre d'Adaptateurs de Protocole (301, 302, 303), présentant ainsi un côté de Noeud Approvisionné vers un côté de Noeud d'Approvisionnement (300) à un Gestionnaire de Réseau ou à un autre gestionnaire de Sous-Réseau, et un côté de Noeud d'Approvisionnement vers un côté de Noeud Approvisionné (100, 200) à un Elément de Réseau ou à un autre Gestionnaire de Sous-Réseau.

11. Procédé selon la revendication 10, dans lequel à la réception d'un ordre d'approvisionnement provenant d'un Gestionnaire de SuM-GI (310) dans un Agent de SuM-GI (410) à un Gestionnaire de Sous-Réseau (400), le procédé comprend en outre les étapes suivantes consistant à :
- transférer l'ordre d'approvisionnement reçu d'un premier Gestionnaire de SuM-GI (310) à un côté de Noeud d'Approvisionnement (300) d'une Entité de Gestion ou d'une Entité Gérée de niveau hiérarchique supérieur, vers un deuxième Gestionnaire de SuM-GI (310) à un côté de Noeud d'Approvisionnement (400) du noeud présent ;
- assigner une technologie de protocole spécifique (301, 302, 303) pour la communication entre le deuxième Gestionnaire de SuM-GI (310) au côté de Noeud d'Approvisionnement (400) du noeud présent et chaque Agent de SuM-GI (110, 210)) des côtés de Noeud Approvisionné (100, 200) respectifs d'Entités Gérées de niveau hiérarchique inférieur ; et
- envoyer des ordres d'approvisionnement (P-01, P-02) à partir du deuxième Gestionnaire de SuM-GI (310) vers au moins un Agent de SuM-GI (110, 210) à un côté de Noeud Approvisionné (100, 200) d'une Entité Gérée de niveau hiérarchique inférieur, avec un certain nombre d'opérations de SuM-GI destinées à travailler sur des Classes d'Objets incluses dans un Modèle de Données de SuM-GI.

12. Procédé selon la revendication 9, dans lequel le Modèle de Données de SuM-GI comprend en outre toute Classe d'Objet Géré, ou des combinaisons de celle-ci, sélectionnée dans un groupe de Classes d'Objets qui comprend:
- une classe d'objet Subscription (C-22), destinée à modéliser l'accord ou le contrat établi entre un abonné et un fournisseur de services, et agencée pour contenir toute l'information liée à l'abonnement ;
- une classe d'objet Subscriber (C-23), destinée à identifier un abonné possédant un abonnement chez un fournisseur de services pour un service donné, et agencée pour enregistrer un nombre d'utilisateurs autorisés à utiliser ledit service donné;
- une classe d'objet ProvidedService (C-21), destinée à modéliser une liste de services offerts d'un fournisseur de services, et agencée pour entretenir des capacités applicables desdits services offerts ;
- une classe d'objet User (C-25), destinée à identifier un utilisateur associé à un abonné donné, et agencée pour personnaliser des préférences d'utilisateur particulières pour un service donné ; et
- une classe d'objet UserServicePreferences (C-24), destinée à permettre à un certain nombre d'utilisateurs associés à un abonné d'avoir des préférences de service particulières, et agencée pour contenir différentes capacités de service activées pour chaque utilisateur.

13. Procédé selon la revendication 9, dans lequel les Opérations de SuM-GI destinées à travailler sur un Modèle de Données de SuM-GI comprennent n'importe quelles Opérations, ou des combinaisons de celles-ci, sélectionnées dans des groupes d'opérations qui incluent:
- créer, modifier, supprimer et obtenir Subscriber ;
- créer, modifier, supprimer et obtenir User ;
- créer, modifier, supprimer et obtenir ProvidedService ;
- créer, modifier, supprimer et obtenir Subscription ;
- ajouter, supprimer et obtenir User en relation avec une classe Subscription donnée ; et
- établir et obtenir User Service Preferences pour un utilisateur sous une classe Subscription donnée.

14. Procédé selon la revendication 9, dans lequel l'Interface Générique de Gestion d'Abonnements "SuM-GI" est agencée pour conserver des attributs ou caractéristiques spécifiques des objets inclus dans le Modèle d'Objet de SuM-GI, dans un réceptacle d'information générique associé à chaque objet particulier, et est agencée pour permettre à chaque Agent de SuM-GI individuel de déterminer si chaque attribut particulier dans une liste d'attributs est applicable ou non dans le noeud où l'Agent de SuM-G1 réside, l'applicabilité dépendant d'un modèle de données interne spécifique dans ledit noeud.
